**Europäisches Patentamt**

**European Patent Office**

**Office européen des brevets**

(19)

(11) Veröffentlichungsnummer: **0 123 878**

**B1**

(12) **EUROPÄISCHE PATENTSCHRIFT**

(45) Veröffentlichungstag der Patentschrift:
20.05.87

(21) Anmeldenummer: **84103140.4**

(22) Anmeldetag: **22.03.84**

(51) Int. Cl.⁴: **B 23 B 51/00**

(54) **Bohrwerkzeug.**

(30) Prioritat: **27.04.83  DE 3315294**

(43) Veröffentlichungstag der Anmeldung:
**07.11.84 Patentblatt 84/45**

(45) Bekanntmachung des Hinweises auf die Patenterteilung:
**20.05.87 Patentblatt 87/21**

(84) Benannte Vertragsstaaten:
**AT CH FR GB IT LI NL SE**

(56) Entgegenhaltungen:
**DE-A-3 125 480**
**FR-A-2 485 969**
**GB-A-2 019 753**
**US-A-4 248 555**

(73) Patentinhaber: **Hermann Bilz GmbH & Co, Robert-Koch- Strasse 36, D-7300 Esslingen (DE)**

(72) Erfinder: **Diehl, Harry, Breite Strasse 68, D-7061 Lichtenwald (DE)**

(74) Vertreter: **Kratzsch, Volkhard, Dipl.- Ing., Mülbergerstrasse 65, D-7300 Esslingen (DE)**

## Beschreibung

Die Erfindung bezieht sich auf ein Bohrwerkzeug, mit mindestens zwei in Umfangsrichtung in etwa gleich großen Winkelabständen voneinander und symmetrisch zueinander angeordneten Wendeschneidplatten und einem in einer zentralen, koaxialen Bohrung auswechselbar gehaltenen Kerneinsatz, der eine der Anzahl der Wendeschneidplatten entsprechende Anzahl stirnseitiger Schneiden aufweist, die jeweils in bezug auf die Mittelachse unter einem spitzen Winkel verlaufen, und mit den Wendeschneidplatten vorgelagerten Spankammern und den Schneiden des Kerneinsatzes vorgelagerten Spannuten.

Es sind Bohrwerkzeuge eingangs genannter Art bekannt, die als typische Stufenbohrer ausgebildet sind (DE-A1-37 25 480 und FR-A1-24 85 960). Der Kerneinsatz besteht dabei aus einem sog. Spiralbohrer herkömmlicher Art, dessen stirnseitige Schneiden bis hin zu der bei herkömmlichen Spiralbohrern vorhandenen Querschneide reichen. Eine definierte Spitze ist einem derartigen Spiralbohrer fremd. Die aus der Querschneide resultierenden Nachteile sind hinlänglich bekannt. Es ergeben sich Probleme beim Nachschleifen. Beim Bohren ergibt sich im Bereich des Bohrerzentrums weniger ein Schneiden als ein Quetschen des Werkstoffes. Außerdem neigt der Bohrer zum Verlaufen. Bei Spiralbohrern größeren Durchmessers wird deswegen mitunter die Querschneide durch Ausspitzen verkürzt, um die Vorschubkraft und die Gefahr des Verlaufens geringer zu halten und den Übergang zwischen dem positiven Spanwinkel der stirnseitigen Schneiden und dem negativen Spanwinkel der Querschneide zu verbessern. Dadurch wiederum wird die Gefahr des Ausbrechens der Querschneide erhöht. Mangels definierter zentraler Spitze und wegen der großen Gefahr des Verlaufens eignen sich Bohrwerkzeuge eingangs genannter Art nicht zum Anbohren auf schrägen oder gebogenen Flächen, z.B. von Gesenkschrägen. Auch ist ein Bohren ohne Ankörnung in aller Regel wegen der großen Gefahr des Verlaufens nicht möglich. Die Spannuten des Spiralbohrers öffnen sich nicht zu den Spankammern des Bohrwerkzeuges hin, sondern verkleinern sich, in Axialrichtung und ausgehend von der Querschneide betrachtet, in Richtung zum übrigen Teil des Bohrwerkzeuges. Dadurch ist die Spanabfuhr relativ stark beeinträchtigt. Es ergibt sich ein Spänestau im axialen Übergangsbereich vom Kerneinsatz zu dem übrigen, die Wendeschneidplatten tragenden Teil des Bohrwerkzeuges. Wegen der erläuterten mangelnden Zentrierung und der unzureichenden Spanabfuhr empfiehlt es sich in aller Regel, solche als Stufenwerkzeug gestalteten Bohrwerkzeuge so einzustellen und zu benutzen, daß zunächst mittels des axial relativ weit überstehenden Spiralbohrers, ausgehend vom vollen Material, die Bohrung mit der gesamten Bohrlochtiefe hergestellt wird, bevor dann die Schneidkanten der Wendeschneidplatten in Eingriff gelangen und diese Bohrung aufbohren. Ein gleichzeitiger Zerspanungsvorgang, bei dem mittels des Kerneinsatzes axial voran aus dem Vollen die Kernbohrung erarbeitet und gleichzeitig mittels der Schneidkanten der Wendeschneidplatten die Aufbohrung vorgenommen wird, scheitert in aller Regel und birgt die Gefahr vorzeitigen Bruchs des Kerneinsatzes in sich. Von Nachteil ist außerdem, daß ein Bohrwerkzeug eingangs genannter Art keine stichmaßgenauen und auch keine durchmessergenauen Bohrungen beim Bohren ins Volle ermöglicht, selbst dann nicht, wenn man dazu besonders aufwendig gestaltete Werkzeugmaschinen mit besonders hochwertiger Spindellagerung einsetzt, die maschinenseitig eine gewisse Führung und Zentrierung garantiert.

Der Erfindung liegt die Aufgabe zugrunde, ein Bohrwerkzeug der eingangs genannten Art zu schaffen, mit dem sich vorzentrierungsfrei und führungsfrei stichmaß- und durchmessermaßgenaue Bohrungen auch beim Bohren ins Volle und beim Paketbohren herstellen lassen.

Die Aufgabe ist bei einem Bohrwerkzeug der eingangs genannten Art gemäß der Erfindung dadurch gelöst, daß der Kerneinsatz am Stirnende eine auf der Mittelachse liegende Spitze aufweist, von der die stirnseitigen Schneiden ausgehen, daß die Schneiden des Kerneinsatzes in etwa auf der Höhe der Schneidkanten der Wendeschneidplatten in diese übergehen und daß die Spannuten, einen ungehinderten Spanfluß zulassend, jeweils in die zugeordneten Spankammern einmünden.

Hierdurch ist eine zentrierende Wirkung des Kerneinsatzes geschaffen, durch die selbst beim Bohren ins Volle oder beim Paketbohren die Herstellung stichmaßgenauer und durchmessermaßgenauer Bohrungen ohne Vorzentrierung oder Führung mittels Bohrbuchse od. dgl. möglich ist. Dabei muß man, um diese hohen Bearbeitungsgüten zu erreichen, das Bohrwerkzeug nicht etwa bei aufwendig gestalteten Werkzeugmaschinen mit besonders hochwertiger Spindellagerung einsetzen, sondern die genannten Vorteile ergeben sich auch bei einfachen und schon recht ausgelaufenen Maschinen, die von der Werkzeugaufnahme her keine besondere Zentrierung oder Führung bieten. Vorteilhaft wirkt sich dazu aus, daß aufgrund symmetrischer Schneidengeometrie keine unsymmetrischen Schnittkräfte vorkommen mit einseitiger radialer Belastung des Bohrwerkzeuges aus der Mitte heraus. Vielmehr wirken beim Bohren praktisch nur Axialdrücke, so daß die Werkzeugmaschinenspindel der verwendeten Maschine keine größeren radialen Zentrier- und Führungsaufgaben erfüllen muß. Durch die zentrierende Wirkung des Kerneinsatzes, die besondere Schneidengeometrie und die Spannuten und Spankammern ergibt sich eine gute Spanabfuhr ohne Gefahr eines etwaigen Spänestaus. Dadurch sind selbst große Bohrtiefen mit großer Genauigkeit erreichbar. Ein weiterer Vorteil liegt darin, daß das Bohrwerkzeug auch ein Anbohren auf kreisbogenförmigen oder schrägen Flächen, z.B. von Gesenkschrägen, ermöglicht. Bei allem kann der Kerneinsatz hinsichtlich seines Durchmessers und seiner Länge sehr klein gehalten werden, so daß er relativ kostengünstig ist und bei der Handhabung als Wegwerfteil praktisch keine größere Materialvergeudung bedeutet, insbesondere im Verhältnis zu den Gesamtkosten des gesamten Bohrwerkzeuges. Ist der Kerneinsatz hinsichtlich seiner Spitze und/oder seiner Schneiden im Laufe der Benutzung stumpf geworden, läßt er sich schnell und einfach gegen einen gleichartigen, neuwertigen Kerneinsatz austauschen, wobei der verbrauchte Kerneinsatz auch nachgeschliffen werden kann. Das Bohrwerkzeug ermöglicht beim Bohren ins Volle nicht nur bezüglich des Durchmessers große Bohrungen mit Bohrgenauigkeit, sondern zugleich auch solche mit sehr großer axialer Länge, ganz gleich, ob es sich um Sacklochbohrungen, Durchgangsbohrungen oder Bohrungen beim Paketbohren handelt, bei dem eine Vielzahl von Platten zu einem dickeren Werkstück zusammengespannt und durchbohrt wird. Auch im letzteren Fall ergeben sich dank der zentrierenden Wirkung des Kerneinsatzes, der Schneidengeometrie und daraus resultierenden guten Spanabfuhr Bohrungen großer Genauigkeit bezüglich des Durchmessers, der Achsparallelität und auch stichmaßgenaue Bohrungen.

Bei einer vorteilhaften Ausführungsform sind drei Wendeschneidplatten und drei zugeordnete stirnseitige Schneiden des Kerneinsatzes vorgesehen. Dadurch wird die Belastung verringert und symmetrischer verteilt, was die Bearbeitungsgüte noch steigert.

Von Vorteil kann es ferner sein, wenn der Spitzenwinkel der stirnseitigen Schneiden des Kerneinsatzes kleiner oder etwa gleich demjenigen der Schneidkanten der Wendeschneidplatten ist. Bei einer weiteren vorteilhaften Ausführungsform schließt sich an jede stirnseitige Schneide des Kerneinsatzes in etwa in Radialrichtung und dabei lückenfrei folgend die stirnseitige Schneidkante wenigstens einer der Wendeschneidplatten an. Von Vorteil kann es ferner sein, wenn sich je Radiallinie an deren Wendeschneidplatte, die sich an eine stirnseitige Schneide des Kerneinsatzes anschließt, zumindest eine weitere Wendeschneidplatte lückenfrei und mit Überdeckung in Umfangsrichtung sowie in Axialrichtung anschließt, die in Umfangsrichtung sowie in Axialrichtung jeweils gegenüber der radial weiter innen sitzenden Wendeschneidplatte zurückgesetzt ist. Die Anordnung mehrerer Wendeschneidplatten je Radiallinie ist an sich bekannt. Durch die beschriebene Ausbildung wird erreicht, daß selbst für herzustellende Bohrungen mit großem Durchmesser eine größere Genauigkeit möglich ist. Vorteilhaft ist, daß je Radiallinie zwischen den Schneiden des Kerneinsatzes und den angrenzenden Schneidkanten der Wendeschneidplatten dank der Überlappung in Radialrichtung und Axialrichtung keine Lücken bestehen, die sonst dazu führen, daß in diesem Bereich nicht zerspanend abgetragenes Material stehen bleiben würde. Ein etwaiger, geringer axialer Überstand mit Stufe führt zu einer Spanteilung im Übergangsbereich von einer Schneide des Kerneinsatzes zu einer Schneidkante der radial angrenzenden Wendeschneidplatte.

Selbst bei sehr großer Radiallinie, auf der zerspanend gearbeitet wird, ergeben sich demgemäß durch Spanteilung demgegenüber beachtlich kleinere Späne, die auch störungsfrei durch die Spannuten und Spankammern abgeführt werden. Dies führt dazu, daß große Bohrungen und dabei auch solche großer axialer Länge, und diese aus dem Vollen heraus, ebenfalls mit großer Genauigkeit hergestellt werden können, ohne daß sich etwa bei großer Spanleistung Spanverstopfungen oder sonstige Schwierigkeiten ergeben.

Eine weitere vorteilhafte Ausführungsform besteht darin, daß der Kerneinsatz auf seiner äußeren Umfangsfläche im Bereich der jeweiligen, radial daran angrenzenden Wendeschneidplatte eine Radialsitzfläche aufweist, die als radiale Zentrier- und Sitzfläche für die zugewandte Schmalfläche der Wendeschneidplatte ausgebildet ist und an der die Wendeschneidplatte mit ihrer Schmalfläche anliegt. Die radiale Zentrier- und Sitzfläche kann dabei je Wendeschneidplatte axial über die ganze Länge des Kerneinsatzes verlaufen. Dadurch ist der Kerneinsatz mit seinen Radialsitzflächen zugleich zur radialen Zentrierung der daran angrenzenden Wendeschneidplatten herangezogen. Besonderer Abstützsitze für die Abstützung der Wendeschneidplatten bedarf es daher nicht. Zugleich ist dadurch erreicht, daß die stirnseitigen Schneiden des Kerneinsatzes radial auf jeden Fall bis hin zu den stirnseitigen Schneidkanten der daran jeweils angrenzenden Wendeschneidplatte verlaufen können, bei Überlappung sogar noch darüber hinaus. Die Maßnahme hat außerdem den Vorteil, daß der Sitz für die an den Kerneinsatz radial anschließenden Wendeschneidplatten relativ einfach zu fertigen ist, weil dann für diese Wendeschneidplatten nur eine rückseitige Abstützfläche in Richtung einer Radialen und eine oberseitige axiale Stützfläche zu fertigen sind, an der die Wendeschneidplatte mit ihrer nach oben weisenden Schmalseite axial abstützbar ist.

Von Vorteil ist außerdem die durch diese Maßnahme erzielte besonders leichte Montage. In Umfangsrichtung ist dadurch die Einbaulage für den Kerneinsatz vorgegeben, da nur dann ein Einsetzen möglich ist, wenn die einzelnen Radialsitzflächen sich tatsächlich in axialer Flucht mit den zugeordneten Schmalflächen der daran angrenzenden Wendeschneidplatten befinden. Der Kerneinsatz läßt sich auf diese Weise besonders schnell und einfach einsetzen und wieder herausnehmen. Man braucht dazu lediglich die daran angrenzenden Wendeschneidplatten zu lockern, um den Kerneinsatz axial herauszuziehen bzw. wieder einschieben zu können.

Das Bohrwerkzeug eingangs genannter Art weist im Werkzeugschaft einen zentralen Kühlmittelkanal auf, der mit zum Ende führenden Kühlmittelkanälen in Verbindung steht. Die Kühlmittelkanäle sind als achsparallele Bohrungen im Schaft ausgebildet, die am Werkzeugende axial ausmünden, und zwar in Arbeitsrichtung des Bohrwerkzeuges gesehen hinter den Wendeschneidplatten und auf einem etwa auf der Mitte der Wendeschneidplatten verlaufenden Umfangskreis. Auf diese Weise ergibt sich eine ungünstige Kühlung, vor allem des Kerneinsatzes, was der Genauigkeit abträglich ist. Eine vorteilhafte Ausführungsform der Erfindung sieht vor, daß der zentrale Kühlmittelkanal in die zentrale Bohrung ausmündet und der Kerneinsatz axial von der einen Stirnfläche bis zum stirnseitigen, die Spitze tragenden Ende durchgehende Kühlmittelkanäle enthält, die mit der zentralen Bohrung in Verbindung stehen. Hierdurch ist eine innere Kühlung eröffnet, obwohl die zentrale Bohrung zur Aufnahme des Kerneinsatzes sowie letzterer im Durchmesser sehr klein im Verhältnis zum Gesamtdurchmesser gehalten sein können. Da die Kühlmittelkanäle im Kerneinsatz vorhanden sind, führen diese Kühlmittel bis vorn zur stirnseitigen Schneide des Kerneinsatzes, so daß eine Kühlung der Schneiden und des in der Entstehung begriffenen Spanes geschieht. Außerdem wird dadurch das Kühlmittel auch bis zu den Wendeschneidplatten geführt, wodurch auch dort eine gute Kühlung der Schneidkanten sowie des in der Entstehung begriffenen Spanes erreicht ist. Dies dient der Erzielung einer großen Standzeit und trägt ebenfalls zu der Herstellung stichmaß- und durchmessermaßgenauer Bohrungen ohne die Notwendigkeit einer Vorzentrierung bei.

Von Vorteil kann es sein, wenn die Kühlmittelkanäle als von der äußeren Umfangsfläche her in den Kerneinsatz eingetiefte Axialnuten ausgebildet sind. Eine weitere vorteilhafte Ausführungsform sieht vor, daß die Axialnuten am der Spitze gegenüberliegenden Stirnende des Kerneinsatzes mit radialen Zuführungskanälen in Verbindung stehen, die von der Stirnfläche her in den Kerneinsatz axial eingetieft sind und in jeweils eine zugeordnete Axialnut ausmünden. Ferner kann es vorteilhaft sein, wenn die Kühlmittelkanäle des Kerneinsatzes am die Spitze tragenden Stirnende jeweils etwa in dem Bereich ausmünden, der sich zwischen zwei aufeinanderfolgenden Schneiden, insbesondere in Umfangsrichtung vor einer einer Schneide vorgelagerten Spannut, befindet.

Der Kerneinsatz kann aus HSS oder Hartmetall bestehen.

Die Erfindung ist nachfolgend anhand eines in den Zeichnungen gezeigten Ausführungsbeispieles eines Bohrwerkzeugees näher erläutert. Es zeigen:

Fig. 1 eine schematische Seitenansicht des unteren Teiles des Bohrwerkzeuges,

Fig. 2 eine Ansicht in Pfeilrichtung II in Fig. 1 auf die Unterseite des Bohrwerkzeuges in Fig. 1,

Fig. 3 eine schematische Seitenansicht des Kerneinsatzes des Bohrwerkzeuges in Fig. 1, in demgegenüber größerem Maßstab,

Fig. 4 eine Ansicht in Pfeilrichtung IV in Fig. 3 auf die Unterseite des Kerneinsatzes,

Fig. 5 einen schematischen axialen Längsschnitt des Bohrwerkzeuges in Fig. 1,

Fig. 6 eine schematische Draufsicht in Pfeilrichtung VI in Fig. 5 des Kerneinsatzes.

Das gezeigte Bohrwerkzeug besteht entweder aus einem Kopf, der in nicht weiter gezeigter Weise lösbar mit einem Träger oder Halter verbunden ist, oder das Bohrwerkzeug ist einstückig mit einem sich an den Kopf anschließenden Werkzeugschaft.

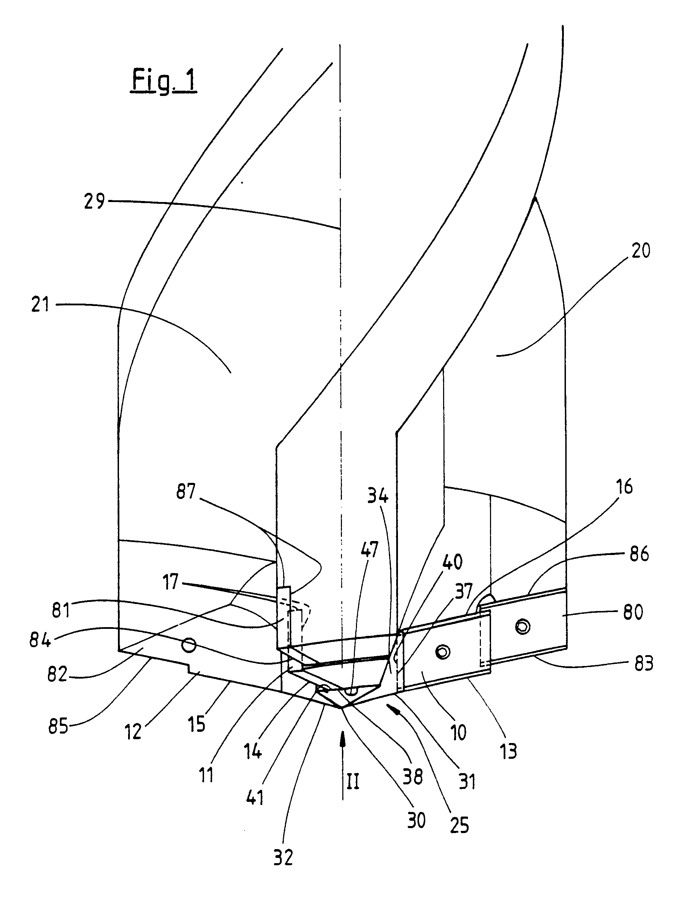

Das Bohrwerkzeug ist beim gezeigten Ausführungsbeispiel dreischneidig. Es weist im wesentlichen entlang dreier Radiallinien, die in Umfangsrichtung in etwa gleich großen Winkelabständen aufeinander folgen, stirnseitige Schneiden auf, die symmetrisch angeordnet sind. Auf jeder dieser drei Radiallinien ist zunächst eine innere Wendeschneidplatte 10, 11, 12 sowie radial anschließend eine äußere Wendeschneidplatte 80, 81, 82 gruppiert. Alle Wendeschneidplatten 10 bis 12 sowie 80 bis 82 tragen stirnseitige Schneidkanten 13 bis 15 bzw. 83 bis 85 am in Fig. 1 unteren Ende, und gleichartige Schneidkanten auf der gegenüberliegenden Seite, die beim Umsetzen der Wendeschneidplatten 10 bis 12, 80 bis 82 wirksam sind. Alle Wendeschneidplatten 10 bis 12, 80 bis 82 sind auswechselbar und in herkömmlicher Weise mittels Schrauben am Werkzeugteil 9 festgespannt. Dabei sind die äußeren Wendeschneidplatten 80 bis 82 in herkömmlicher Weise in zugeordneten Halterungssitzen 86 bis 88 fixiert, in denen die Wendeschneidplatten 80 bis 82 sowohl rückseitig als auch mit der radial nach innen weisenden sowie axial nach oben weisenden Schmalfläche exakt positioniert und gehalten sind.

Die inneren Wendeschneidplatten 10, 11, 12 sind praktisch ebenso fixiert. Sie sitzen in Halterungssitzen 16 bis 18, in denen die Wendeschneidplatten 10 bis 12 rückseitig und mit der axial in Fig. 1 nach oben weisenden Schmalfläche anliegen. Es wird später noch näher erläutert, wie die Zentrierung mit der radial nach innen weisenden Schmalfläche der Wendeschneidplatten 10 bis 12 geschieht.

Jeder auf einer Radiallinie liegenden Gruppe von Wendeschneidplatten 10, 80 bzw. 11, 81 bzw.

12, 82 ist eine Spankammer 20, 21, 22 im Werkzeugteil 9 in Arbeitsrichtung gemäß Pfeil 8 vorgelagert, die mit geeignetem Spiralwinkel spiralförmig verläuft, wie z.B. bei Spiralbohrern bekannt ist.

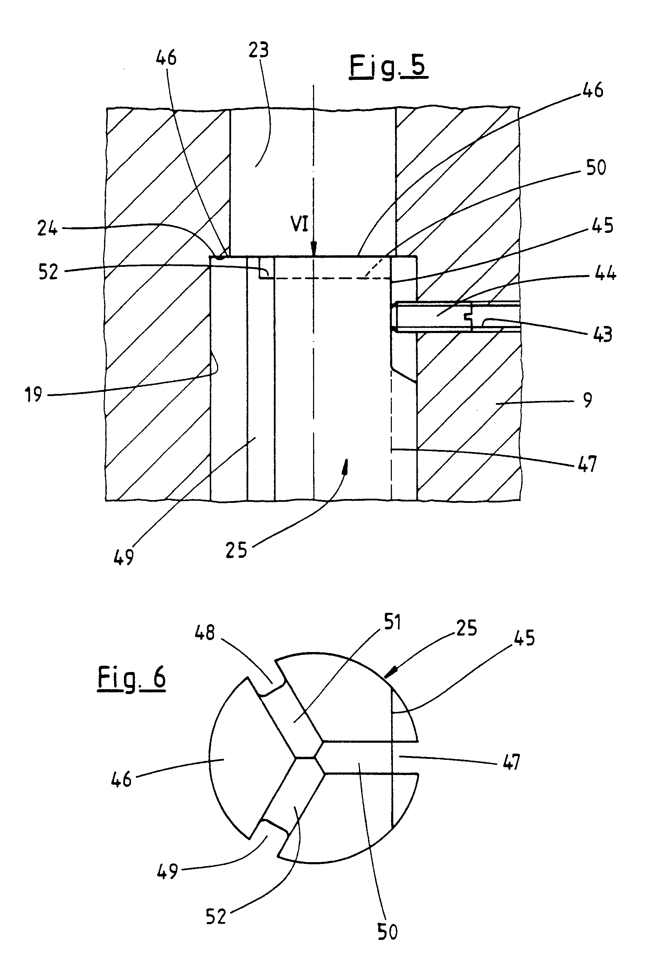

Der Werkzeugteil 9 weist eine zentrale, zur Längsmittelachse koaxiale Bohrung 19 auf, die zumindest im unteren Verlauf innen als glattwandige Zylinderbohrung ausgebildet ist mit Zentrierungs- und Führungseigenschaft. Die Bohrung 19 reicht axial nach oben in den Werkzeugschaft. Dieser enthält beim gezeigten Ausführungsbeispiel einen koaxialen, zentralen Kühlmittelkanal 23 (Fig. 5), der nach unten in die Bohrung 19 unter dortiger Belassung einer Ringschulter 24 als axiale Stütz- und Anschlagfläche ausmündet.

In der Bohrung 19 ist ein zentraler Kerneinsatz 25 auswechselbar gehalten, der aus einem Zylinderteil besteht, dessen axiale Länge im Verhältnis zum Durchmesser des gesamten Bohrwerkzeuges relativ klein ist und z.B. maximal etwa das Vierfache des Durchmessers des Kerneinsatzes 25 beträgt. Der Kerneinsatz 25 weist auf seiner äußeren Umfangsfläche zumindest in etwa gleichen Umfangswinkelabständen aufeinanderfolgende Zylinderflächenabschnitte 26 bis 28 auf, die mit der Zylinderwand der Bohrung 19 unter Zentrierung des Kerneinsatzes 25 in Berührung stehen.

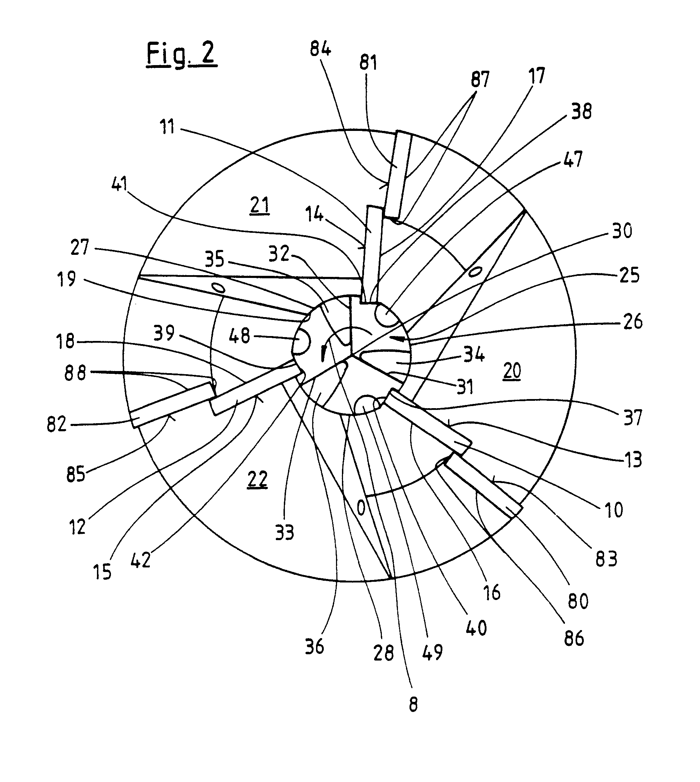

Der Kerneinsatz 25 besteht aus HSS oder aus Hartmetall. Er ist vorzugsweise als Wegwerfteil gedacht, das nicht nachgeschliffen wird. Im einzelnen weist der Kerneinsatz 25 am in Fig. 1 unteren Stirnende eine auf der Mittelachse 29 liegende Spitze 30 sowie drei von der Spitze 30 ausgehende stirnseitige Schneiden 31, 32, 33 auf, denen in Umfangsrichtung gemäß Pfeil 8 Spannuten 34 bis 36 vorgelagert sind. Wie insbesondere Fig. 2 zeigt, leiten die Spannuten 34 bis 36 radial außen in die jeweiligen Spankammern 20 bis 22 über, so daß von den Schneiden 31 bis 33 gebildete Späne über die vorgelagerte Spannut 34 bis 36 und radial anschließende Spankammer 20 bis 22 abgeführt werden können.

Der Kerneinsatz 25 und der diesen enthaltende übrige Werkzeugteil 9 ergänzen sich zum kompletten Bohrwerkzeug, das zum Bohren ins Volle, zum Paketbohren od. dgl. geeignet ist und die Herstellung von Bohrungen mit sogar sehr großen Durchmessern mit hoher Genauigkeit möglich macht, dabei mit großer Zerspanungsleistung und dies, ohne daß dazu aufwendig gestaltete Werkzeugmaschinen mit besonders hochwertiger Spindellagerung nötig sind. Aufgrund der symmetrischen Schneidenanordnung wirken keine unsymmetrischsn Schneidkräfte und Schneidenbelastungen, sondern im wesentlichen allein Axialkräfte.

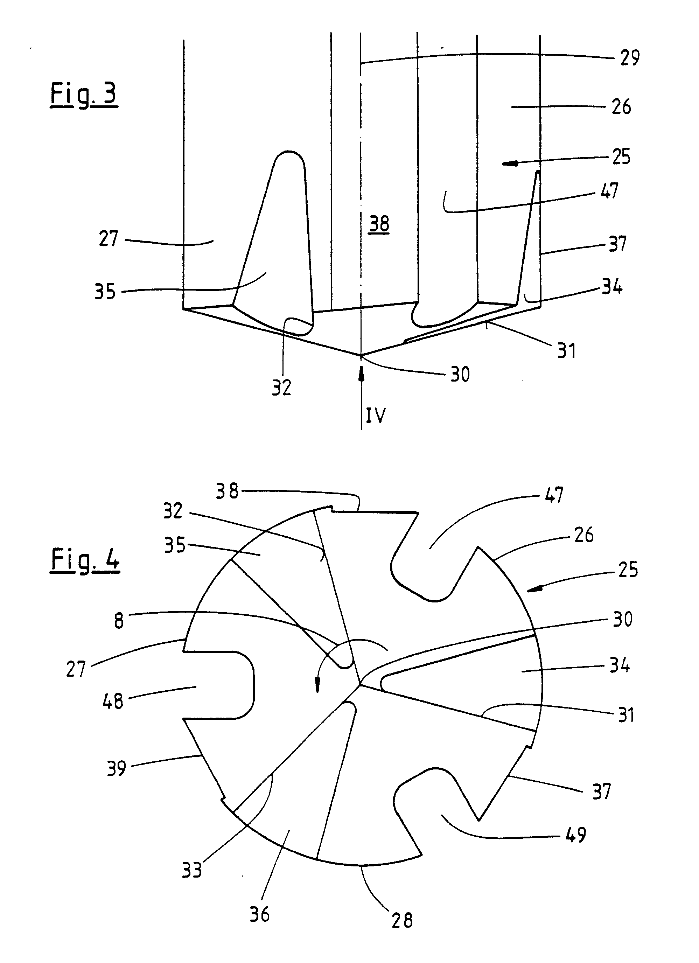

Wie dargestellt, entspricht die Anzahl der beim Kerneinsatz 25 vorgesehenen Schneiden 31 bis 33 der Anzahl sonstiger Schneiden des Werkzeugteiles 9. Die stirnseitigen Schneiden 31 bis 33 sind ebenso wie die Wendeschneidplatten in etwa gleich großen Umfangswinkelabständen voneinander und dabei symmetrisch angeordnet. Fig. 1 und 3 zeigen, daß die stirnseitigen Schneiden 31 bis 33 des Kerneinsatzes 25 unter einem Spitzenwinkel zueinander verlaufen, der etwas kleiner ist oder etwa gleich dem Spitzenwinkel ist, unter dem z.B. die stirnseitigen Schneidkanten 13 bis 15 der radial innen befindlichen, sich an die Schneiden 31 bis 33 anschließenden inneren Wendeschneidplatten 10 bis 12 verlaufen.

Dabei ist die Anordnung so getroffen, daß sich - in Radialrichtung betrachtet - an jede stirnseitige Schneide 31 bis 33 des Kerneinsatzes 25 die stirnseitige Schneidkante 13 bis 15 der Wendeschneidplatten 10 bis 12 zumindest etwa in radialer Verlängerung und dabei lückenfrei folgend anschließt. Diese Lückenfreiheit ist wichtig, weil sonst beim Bohren im Lückenbereich nicht zerspantes Material stehenbleiben würde. In gleicher Weise sind auch die auf der gleichen Radiallinie verlaufenden Wendeschneidplatten 10, 80 bzw. 11, 81 bzw. 12, 82 so plaziert, daß sie in Radialrichtung gesehen lückenfrei aufeinander folgen. Diese Lückenfreiheit ist hier dadurch garantiert, daß sich die einzelnen Schneiden je Radiallinie in Radialrichtung überlappen, wobei sie in Umfangsrichtung betrachtet radial von innen nach außen hin hintereinander gestuft angeordnet sind. So überlappt die stirnseitige Schneide 31 des Kerneinsatzes 25 in Radialrichtung die Schneidkante 13 der inneren Wendeschneidplatte 10, die demgegenüber in Umfangsrichtung zurückversetzt ist. Die stirnseitige Schneidkante 13 der inneren Wendeschneidplatte 10 überlappt in Radialrichtung gesehen ihrerseits die stirnseitige Schneidkante 83 der äußeren Wendeschneidplatte 80, die demgegenüber in Umfangsrichtung gesehen weiter zurückgestuft ist.

Fig. 1 zeigt ferner auch eine Überlappung in Axialrichtung. So stehen die stirnseitigen Schneiden 31 bis 33 des Kerneinsatzes 25 axial nach unten am weitesten vor. Diesen gegenüber sind die stirnseitigen Schneidkanten 13 bis 15 der inneren Wendeschneidplatten 10 bis 12 axial zurückgesetzt. Nach dem gleichen Prinzip sind die stirnseitigen Schneidkanten 83 bis 85 der äußeren Wendeschneidplatten 80 bis 82 in bezug auf die Schneidkanten 13 bis 15 der inneren Wendeschneidplatten 10 bis 12 axial zurückgesetzt. Durch diese Stufung sind Spanteilerstufen geschaffen, so daß sich bei der Bearbeitung mittels des Bohrwerkzeuges drei Späne ergeben, nämlich zum einen der im Zentrum mittels der Schneiden 31 bis 33 des Kerneinsatzes 25 gebildete Span, ferner der mittels der stirnseitigen Schneidkanten 13 bis 15 der inneren Wendeschneidplatten 10 bis 12 gebildete Span und schließlich der mittels der stirnseitigen Schneidkanten 83 bis 85 der äußeren Wendeschneidplatten 80 bis 82 gebildete Span. Diese Späne sind jeweils untereinander aufgrund der Schneidengeometrie symmetrisch, so daß sich keine unsymmetrischen Belastungen ergeben. Bedingt durch die Spannuten 34 bis 36 des Kerneinsatzes 25 sowie die spiralförmigen Spankammern 20 bis 22 des übrigen Werkzeugteiles 9, die nur sehr schmale spiralförmige Stege dazwischen übrig lassen und daher ein großes inneres Freiraumvolumen haben, ist eine gute, störungsfreie Spanabfuhr gewährleistet, auch bei relativ großen Spänen.

Der Kerneinsatz 25 dient zugleich zur radialen Abstützung und Zentrierung der inneren Wendeschneidplatten 10 bis 12. Dazu weist der Kerneinsatz 25 auf seiner äußeren Umfangsfläche im Bereich der jeweiligen, radial daran angrenzenden inneren Wendeschneidplatten 10 bis 12 je Wendeschneidplatte eine Radialsitzfläche 37 bzw. 38 bzw. 39 auf. Diese ist als radiale Zentrier- und Sitzfläche für die zugewandte Schmalfläche 40 bzw. 41 bzw. 42 der jeweiligen Wendeschneidplatte 10 bzw. 11 bzw. 12 ausgebildet. Jede Wendeschneidplatte 10 bis 12 ist also, nach dem Einsetzen und Fixieren des Kerneinsatzes 25, mit ihrer Schmalfläche 40 bis 42 paßgenau an der zugeordneten Radialsitzfläche 37 bis 39 als Teil des Halterungssitzes 16 bis 18 zentriert. Der Kerneinsatz 25 bildet also insoweit einen Teil des Halterungssitzes 16 bis 18 für die Wendeschneidplatten 10 bis 12. Die Radialsitzflächen 37 bis 39 verlaufen beim Kerneinsatz 25 axial über dessen ganze Länge, so daß dessen Austausch bei lediglich gelockerter innerer Wendeschneidplatte 10 bis 12 problemlos möglich ist.

Der Werkzeugteil 9 enthält eine radiale Gewindebohrung 43, in die von außen eine Klemmschraube 44 z.B. in Form einer Wurmschraube eingeführt ist, die endseitig abgeflacht ist und mit diesem Ende gegen eine zugeordnete Planfläche 45 des Kerneinsatzes 25 drückt. Dadurch ist der Kerneinsatz 25 vorrangig gegen Verdrehung um die Mittelachse 29 und außerdem natürlich gegen axiales Herausfallen gesichert.

Eine Sicherung gegen axiales Hereindrücken des Kerneinsatzes 25 ist dadurch geschaffen, daß dieser mit seiner der Spitze 30 gegenüberliegenden, planen Stirnfläche 46 axial an der Ringschulter 24 am Boden der Bohrung 19 abgestützt ist.

Das Bohrwerkzeug hat innere Kühlkanäle. Auch der Kerneinsatz 25 enthält Kühlmittelkanäle 47 bis 49, die axial von der ebenen Stirnfläche 46 bis zum stirnseitigen, die Spitze 30 tragenden Ende durchgehen. Die Kühlmittelkanäle 47 bis 49 sind als Axialnuten ausgebildet, die von der äußeren Umfangsfläche her in den Kerneinsatz 25 eingetieft sind. Am der Spitze 30 gegenüberliegenden Stirnende des Kerneinsatzes 25 stehen die Kühlmittelkanäle 47 bis 49 mit radialen Zuführungskanälen 50 bis 52 in Verbindung, die von der Stirnfläche 46 her in den Kerneinsatz 25 axial eingetieft sind und in jeweils einen zugeordneten Kühlmittelkanal 47 bis 49 ausmünden. Diese Zuführungskanäle sind deswegen nötig, weil durch das Aufsitzen auf der Ringschulter 24 der dort befindliche Einlaß der Kühlmittelkanäle 47 bis 49 geschlossen ist und eine größere Eintiefung für die Kühlmittelkanäle 47 bis 49 sich besonders bei im Durchmesser sehr kleinen Kerneinsätzen 25 aus Festigkeitsgründen nicht empfiehlt.

Die Kühlmittelkanäle 47 bis 49 des Kerneinsatzes 25 münden am in Fig. 1 unteren Ende etwa in dem Bereich aus, der sich zwischen zwei in Umfangsrichtung aufeinanderfolgenden Schneiden 31 bis 33 des Kerneinsatzes befindet. Genauer definiert liegt die Ausmündungsstelle der Kühlmittelkanäle 47 bis 49 jeweils vorgelagert einer Schneide 31 bis 33 und der dieser vorgelagerten Spannut 34 bis 36. So liegt die Ausmündungsstelle des Kühlmittelkanals 47 z.B. im Bereich vor der Spannut 34, die der Schneide 31 vorgelagert ist.

Obwohl beim Ausführungsbeispiel ein dreischneidiges Bohrwerkzeug dargestellt und beschrieben ist, ist auch eine zweischneidige Ausbildung oder auch vierschneidige und mehrschneidige Ausführung möglich. Mit dem beschriebenen Bohrwerkzeug können Bohrungen sehr großen Durchmessers und auch großer Tiefe durch Bohren direkt ins Volle hergestellt werden. Beim gezeigten Ausführungsbeispiel hat das Bohrwerkzeug z.B. einen Außendurchmesser von 40 mm, was keinesfalls die obere Grenze darstellt. Das Bohrwerkzeug ist auf jeden Fall nicht auf den Arbeitsbereich sog. Kurzlochbohrer beschränkt, sondern für Bohrungen auch wesentlich größerer Tiefe geeignet, und dabei ohne Notwendigkeit des Vorbohrens. Sind die Schneiden 31 bis 33 des Kerneinsatzes 25 stumpf geworden, muß nicht etwa das gesamte Bohrwerkzeug erneuert werden. Vielmehr kann durch Lockern der Klemmschraube 44 und Lockern der inneren Wendeschneidplatten 10 bis 12 der Kerneinsatz 25 herausgenommen und gegen einen neuen ausgetauscht werden.

Das Bohrwerkzeug kann praktisch auf jeder Werkzeugmaschine eingesetzt werden. Besonders aufwendig gestaltete Werkzeugmaschinen mit besonders hochwertiger Spindellagerung sind nicht nötig. Aufgrund der symmetrischen Schneidenanordnung wirken beim Bohren praktisch nur Axialdrücke. Unsymmetrische Schnittkräfte, die einseitige Radialbelastung zur Folge haben könnten, kommen nicht vor. Ein weiterer wesentlicher Vorteil liegt darin, daß das erfindungsgemäße Bohrwerkzeug ein Anbohren auf kreisbogenförmigen oder schrägen Flächen, z.B. von Gesenkschrägen, ermöglicht, was mit bekannten Werkzeugen unmöglich ist.

## Patentansprüche

1. Bohrwerkzeug mit mindestens zwei in Umfangsrichtung in etwa gleich großen Winkelabständen voneinander und symmetrisch zueinander angeordneten Wendeschneidplatten (10 bis 12) und einem in einer zentralen, koaxialen Bohrung (19) auswechselbar gehaltenen Kerneinsatz (25), der eine der Anzahl der Wendeschneidplatten (10 bis 12) entsprechende Anzahl stirnseitiger Schneiden (31 bis 33) aufweist, die jeweils in bezug auf die Mittelachse (29) unter einem spitzen Winkel verlaufen, und mit den Wendeschneidplatten (10 bis 12) vorgelagerten Spankammern (20 bis 22) und den Schneiden (31 bis 33) des Kerneinsatzes (25) vorgelagerten Spannuten (34 bis 36), dadurch gekennzeichnet, daß der Kerneinsatz (25) am Stirnende eine auf der Mittelachse (29) liegende Spitze (30) aufweist, von der die stirnseitigen Schneiden (31 bis 33) ausgehen, daß die Schneiden (31 bis 33) des Kerneinsatzes (25) in etwa auf der Höhe der Schneidkanten (13 bis 15) der Wendeschneidplatten (10 bis 12) in diese übergehen und daß die Spannuten (34 bis 36), einen ungehinderten Spanfluß zulassend, jeweils in die zugeordneten Spankammern (20 bis 22) einmünden.

2. Bohrwerkzeug nach Anspruch 1, gekennzeichnet durch drei Wendeschneidplatten (10 bis 12) und drei zugeordnete stirnseitige Schneiden (31 bis 33) des Kerneinsatzes (25).

3. Bohrwerkzeug nach Anspruch 1 oder 2, dadurch gekennzeichnet, daß der Spitzenwinkel der stirnseitigen Schneiden (31 bis 33) des Kerneinsatzes (25) kleiner oder etwa gleich demjenigen der Schneidkanten (13 bis 15) der Wendeschneidplatten (10 bis 12) ist.

4. Bohrwerkzeug nach einem der Ansprüche 1 - 3, dadurch gekennzeichnet, daß sich an jede stirnseitige Schneide (31 bis 33) des Kerneinsatzes (25) in etwa in Radialrichtung und dabei lückenfrei folgend die stirnseitige Schneidkants (13 bzw. 14 bzw. 15) wenigstens einer der Wendeschneidplatten (10 bzw. 11 bzw. 12) anschließt.

5. Bohrwerkzeug nach einem der Ansprüche 1 - 4, dadurch gekennzeichnet, daß sich je Radiallinie an deren Wendeschneidplatte (10 bis 12), die sich an eine stirnseitige Schneide (31 bzw. 32 bzw. 33) des Kerneinsatzes (25) anschließt, zumindest eine weitere Wendeschneidplatte (80 bzw. 81 bzw. 82) lückenfrei und mit Überdeckung in Umfangsrichtung sowie in Axialrichtung anschließt, die in Umfangsrichtung sowie in Axialrichtung jeweils gegenüber der radial weiter innen sitzenden Wendeschneidplatte (10 bzw. 11 bzw. 12) zurückgesetzt ist.

6. Bohrwerkzeug nach einem der Ansprüche 1 - 5, dadurch gekennzeichnet, daß der Kerneinsatz (25) auf seiner äußeren Umfangsfläche im Bereich der jeweiligen, radial daran angrenzenden Wendeschneidplatte (10 bis 12) eine Radialsitzfläche (37 bis 39) aufweist, die als radiale Zentrier- und Sitzfläche für die zugewandte Schmalfläche (40 bis 42) der Wendeschneidplatte (10 bis 12) ausgebildet ist und an der die Wendeschneidplatte (10 bis 12) mit ihrer Schmalfläche (40 bis 42) anliegt.

7. Bohrwerkzeug nach Anspruch 6, dadurch gekennzeichnet, daß die radiale Zentrier- und Sitzfläche (37 bis 39) je Wendeschneidplatte (10 bis 12) axial über die ganze Länge des Kerneinsatzes (25) verläuft.

8. Bohrwerkzeug nach einem der Ansprüche 1 - 7, mit einem im Werkzeugschaft enthaltenen, zentralen Kühlmittelkanal, der mit zum Ende führenden Kühlmittelkanälen in Verbindung steht, dadurch gekennzeichnet, daß der zentrale Kühlmittelkanal (23) in die zentrale Bohrung (19) ausmündet und der Kerneinsatz (25) axial von der einen Stirnfläche (46) bis zum stirnseitigen, die Spitze (30) tragenden Ende durchgehende Kühlmittelkanäle (47 bis 49) enthält, die mit der zentralen Bohrung (19) in Verbindung stehen.

9. Bohrwerkzeug nach Anspruch 8, dadurch gekennzeichnet, daß die Kühlmittelkanäle (47 bis 49) als von der äußeren Umfangsfläche her in den Kerneinsatz (25) eingetiefte Axialnuten ausgebildet sind.

10. Bohrwerkzeug nach Anspruch 9, dadurch gekennzeichnet, daß die Axialnuten am der Spitze (30) gegenüberliegenden Stirnende des Kerneinsatzes (25) mit radialen Zuführungskanälen (50 bis 52) in Verbindung stehen, die von der Stirnfläche (46) her in den Kerneinsatz (25) axial eingetieft sind und in jeweils eine zugeordnete Axialnut ausmünden.

11. Bohrwerkzeug nach einem der Ansprüche 8 - 10, dadurch gekennzeichnet, daß die Kühlmittelkanäle (47 bis 49) des Kerneinsatzes (25) am die Spitze (30) tragenden Stirnende jeweils etwa in dem Bereich ausmünden, der sich zwischen zwei aufeinanderfolgenden Schneiden (31 bis 33), insbesondere in Umfangsrichtung vor einer einer Schneide vorgelagerten Spannut (34 bis 36) befindet.

12. Bohrwerkzeug nach einem der Ansprüche 1 - 11, dadurch gekennzeichnet, daß der Kerneinsatz (25) aus HSS oder Hartmetall besteht.

## Claims

1. Drilling toal having at least two spiral cutting plates (10 to 12) disposed symmetrically of each other and in a peripheral direction spaced apart by substantially equal angle intervals and also comprising, supported in interchangeable fashion in a central co-axial bore (19), a core insert (25) having a number of cutting edges (31 to 33) mounted on the end face and corresponding in their number to the number of spiral cutting plates (10 to 12), the cutting edges extending in each case at an acute angle in respect of the central axis (29) and comprising chip chambers (20 to 22) leading the spiral cutting plates (10 to 12) and chip grooves (34 to 36) leading the cutting edges (31 to 33) of the core insert (25), characterised in that the core insert (25) has at its working end a point (30) located on the central axis (29) and from which emerge the end-mounted cutting edges (31 to 33), and in that the cutting edges (31 to 33) of the core insert (25) merge into the spiral cutting plates (10 to 12) substantially at the height of the cutting edges (13 to 15) and in that the chip grooves (34 to 36), while admitting of unhampered flow of chips, merge in each case into the associated chip chambers (20 to 22).

2. Drilling tool according to Claim 1, characterised by three spiral cutting plates (10 to 12) and three associated cutting edges (31 to 33) provided on the end face of the core insert (25).

3. Drilling tool according to Claim 1 or 2, characterised in that the acute angle of the cutting edges (31 to 33) provided on the end face of the core insert (25) is smaller than or substantially equal to that of the cutting edges (13 to 15) on the spiral cutting platms (10 to 12).

4. Drilling tool according to one of Claims 1 to 3, characterised in that adjacent each end cutting cutting edge (31 to 33) on the core insert (25), following it substantially in a radial direction and with no gaps is the end cutting edge (13 or 14 or 15) of at least one of the spiral cutting plates (10 or 11 or 12).

5. Drilling tool according to one of Claims 1 to 4, characterised in that each radial line on its spiral cutting plate (10 to 12) which is adjacent an end cutting edge (31 or 32 or 33) on the core insert (25) has adjacent to it at least one further spiral cutting plate (80 or 81 or 82) with no gap and with an overlap in a peripheral direction and also in an axial direction being set back in a peripheral direction as well as in an axial direction in each case in respect of the radially further inwardly located spiral cutting plate (10 to 11 or 12).

6. Drilling tool according to one of Claims 1 to 5, characterised in that the core insert (25) has on its outer peripheral face in the region of the relevant radially adjacent spiral cutting plate (10 to 12) a radial seating surface (37 to 39) which is constructed as a radial centring and seating surface for the facing narrow surface (40 to 42) of the spiral cutting plate (10 to 12) and on which the narrow surface (40 to 42) of the spiral cutting plate (10 to 12) rests.

7. Drilling tool according to Claim 6, characterised in that the radial centring and seating surface (37 to 39) of each spiral cutting plate (10 to 12) extends axially over the entire length of the core insert (25).

8. Drilling tool according to one of Claims 1 to 7 with, contained in the tool shank, a central coolant passage which communicates with coolant passages leading to the end, characterised in that the central coolant passage (23) opens out into the central bore (19) and in that the core insert (25) contains, extending continuously from one end face (46) to the end which includes the tip (30) at the working face, coolant passages (47 to 49) which communicate with the central bore (19).

9. Drilling tool according to Claim 8, characterised in that the coolant passages (47 to 49) are constructed as axial grooves recessed from the outer peripheral surface into the core insert (25).

10. Drilling tool according to Claim 9, characterised in that at the working end of the core insert (25) which is opposite the tip (30), the axial grooves communicate with the radial feed passages (50 to 52) which are recessed axially from the end face (46) into the core insert (25), opening out in each case into an associated axial groove.

11. Drilling tool according to one of Claims 8 to 10, characterised in that the coolant passages (47 to 49) of the core insert (25) on the end face which comprises the tip (30) open out in each case substantially in the area located between two successive cutting edges (51 to 53), particularly in a peripheral direction in front of a chip groove (34 to 36) which precedes a cutting edge.

12. Drilling tool according to one of Claims 1 to 11, characterised in that the core insert (25) consists of hard metal or high speed steel.

**Revendications**

1. Outil de perçage comportant au moins deux plaquettes réversibles (10 à 12) disposées à distances angulaires égales l'une de l'autre et symétriquement l'une par rapport à l'autre, et une âme (25) amovible maintenue dans un alésage central coaxial (19), laquelle comporte un nombre de tranchants frontaux (31 à 33) correspondant au nombre des plaquettes (10 à 12), lesquels tranchants font respectivement un angle aigu avec l'axe médian (29), deux logements de copeaux (20 à 22) ménagés avant les plaquettes réversibles (10 à 12), et des goujures (34 à 36) ménagées avant les tranchants (31 à 33) de l'âme (25), caractérisé en ce que l'âme (25) comporte, à l'extrémité frontale, une pointe (30) située sur l'axe médian (29), dont partent les tranchants frontaux (31 à 33), les tranchants (31 à 33) de l'âme (25) se raccordent aux tranchants (13 à 15) des plaquettes (10 à 12) sensiblement à la hauteur des tranchants (13 à 15) et les goujures (34 à 36), permettant un écoulement sans obstacle des copeaux, débouchent respectivement dans les logements de copeaux associés (20 à 22).

2. Outil de perçage selon la revendication 1, caractérisé par trois plaquettes réversibles (10 à 12) ou trois tranchants frontaux (31 à 33) de l'âme (25) associés à celle-ci.

3. Outil de perçage selon la revendication 1 ou 2, caractérisé en ce que l'angle au sommet des tranchants frontaux (31 à 33) de l'âme (25) est inférieur ou sensiblement égal à celui des tranchants (13 à 15) des plaquettes (10 à 12).

4. Outil de perçage selon l'une des revendications 1 à 3, caractérisé en ce que, le tranchant frontal (13, 14, 15) d'au moins une des plaquettes (10; 11 ou 12) se raccorde, sensiblement dans le sens radial et sans intervalle, à chaque tranchant frontal (31 à 33) de l'âme (25).

5. Outil de perçage selon l'une des revendications 1 à 4, caractérisé en ce que, à la plaquette (10 à 12) de chaque rayon se raccordant à un tranchant frontal (31, 32 ou 33) de l'âme (25) se raccorde au moins une autre plaquette (80, 81 ou 82), sans intervalle et avec chevauchement dans le sens périphérique ainsi que dans le sens axial, laquelle est décalée vers l'arrière dans le sens périphérique ainsi que dans le sens axial par rapport à la plaquette (10, 11 ou 12) située plus loin radialement à l'intérieur.

6. Outil de perçage selon l'une des revendications 1 à 5, caractérisé en ce que l'âme (25) porte sur sa surface périphérique extérieure, dans la zone de chaque plaquette radialement adjacente (10 à 12), une surface d'appui radial (37 à 39) qui est réalisée sous forme de surface de centrage et d'appui radial pour la surface étroite (40 à 42), tournée vers elle, de la plaquette (10 à 12), et sur laquelle la plaquette (10 à 12) appuie par sa surface étroite.

7. Outil de perçage selon la revendication 6, caractérisé en ce que la surface de centrage et d'appui radial (37 à 39) pour chaque plaquette (10 à 12) s'étend axialement sur toute la longueur de l'âme (25).

8. Outil de perçage selon l'une des revendications 1 à 7, comportant un canal de refroidissement central contenu dans la queue de l'outil, lequel est relié au canal de refroidissement allant jusqu'à l'extrémité, caractérisé en ce que le canal de refroidissement central (23) débouche dans l'alésage central (19) et l'âme (25) contient des canaux de refroidissement (47 à 49) traversant dans le sens axial de l'une des surfaces frontales (46) jusqu'à l'extrémité frontale portant la pointe (30), lesquels canaux sont reliés à l'alésage central (19).

9. Outil de perçage selon la revendication 8, caractérisé en ce que les canaux de refroidissement (47 à 49) sont réalisés sous forme de gorges axiales pénétrant dans l'âme (25) à partir de la surface périphérique extérieure.

10. Outil de perçage selon la revendication 9, caractérisé en ce que les gorges axiales, à l'extrémité frontale de l'âme (25) opposée à la pointe (30) sont reliées aux canaux d'amenée radiaux (50 à 52) qui s'enfoncent axialement dans l'âme (25) à partir de la surface frontale (46) et débouchent respectivement dans une gorge axiale associée.

11. Outil de perçage selon l'une des revendications 8 à 10, caractérisé en ce que les canaux de refroidissement (47 à 49) de l'âme (25), à l'extrémité frontale portant la pointe (30), débouchent respectivement sensiblement dans la zone qui se trouve entre deux tranchants successifs (31 à 33) notamment avant une goujure (34 à 36) située avant un tranchant dans le sens périphérique.

12. Outil de perçage selon l'une des revendications 1 à 11, caractérisé en ce que l'âme (25) est en acier H.R. ou en métal dur.

Fig. 1

Fig. 2

Fig. 3

Fig. 4

Fig. 5

Fig. 6